(19) Europäisches Patentamt
European Patent Office
Office européen des brevets

(11) **EP 2 586 892 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **12405111.1**

(22) Anmeldetag: **18.10.2012**

(51) Int Cl.:
*C23C 30/00* *(2006.01)*　　　*A47J 36/00* *(2006.01)*
*A47J 36/02* *(2006.01)*　　　*C23C 28/04* *(2006.01)*

(54) **Kochgerät**

Cooking device

Appareil de cuisson

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2011 EP 11405345**

(43) Veröffentlichungstag der Anmeldung:
**01.05.2013 Patentblatt 2013/18**

(73) Patentinhaber: **Hort, Stefan**
**3973 Venthône (CH)**

(72) Erfinder: **Hort, Stefan**
**3973 Venthône (CH)**

(56) Entgegenhaltungen:
**EP-A1- 1 048 751　　WO-A2-2007/070601**
**JP-A- 8 173 321**

EP 2 586 892 B1

**Beschreibung**

**Technisches Gebiet**

Die Erfindung betrifft ein für zu erwärmendes Kochgut antihaftend beschichtetes Kochgerät.

**Stand der Technik**

Es sind vielfältige antihaftend wirkende Beschichtungen auf Innenbereichen, insbesondere auf Innenböden von Kochgeräten bekannt. In der Regel werden polytetrafluorethylenhaltige (PTFE) Beschichtungen gewählt. Um die Beschichtung widerstandsfähig gegen Abrasion zu machen, wurden dem Schichtmaterial ultrafeine Diamantkristalle in der Grössenordnung von 200 Å bis 1200 Å (10 Å = 1 nm) beigemischt [JP 08173321]. In der JP 7067784 wurden Diamantkristalle kleiner 100 Å beigemischt.

Die WO 2007/070601 Ar beschreibt eine antihaftende Beschichtung.

Die in der EP 1 048 751 beschriebene antihaftende Beschichtung eines Küchengerätes hatte auf dem Geräteinnenboden eine untere Mischschicht mit einer Dicke zwischen 50 μm und 150 μm. Auf der Mischschicht lag eine mittlere Schicht mit einer Dicke von 1 μm bis 10 μm und auf dieser wiederum eine Deckschicht mit einer Dicke von 2 μm bis 10 μm. In die Mischschicht (Dicke zwischen 50 μm und 150 μm) waren Diamantminikristalle mit einem Durchmesser von 0,5 μm bis 10 μm und in die mittlere Schicht Diamanten mit ebenfalls einem Durchmesser von 0,5 μm bis 10 μm eingelagert. Bei der in die weitere Schicht eingelagerten Diamanten waren die Diamantendurchmesser und die Schichtdicke derart passend zu wählen, dass die Diamanten jeweils kleiner waren als die Schichtdicke. Die Diamanten in der untersten Mischschicht mit ihren 1 μm bis 10 μm Durchmesser waren immer bedeutend kleiner als die Schichtdicke von 50 μm bis 150 μm.

**Aufgabe der Erfindung**

Aufgabe der Erfindung ist es, eine antihaftend wirkende und sehr gut wärmeleitende Beschichtung auf einem Küchengeräteinnenboden zu schaffen.

**Lösung der Aufgabe**

Die Aufgabe wird durch ein Kochgerät mit den Merkmalen von Anspruch 1 gelöst.

Die EP 1 048 751 behauptete zwar auch eine gut wärmeleitende Beschichtung auf einem Küchengeräteinnenboden zu schaffen; sie übersah jedoch, dass im Verhältnis zur Schichtdicke, kleine Diamantkristalle in einem wärmeisolierenden Schichtmaterial keine gute Wärmeübertragung zwischen dem Küchengeräteinnenboden und dem auf der Beschichtung aufliegenden Kochgut erbringen konnten. Die Wärmeleitfähigkeit der in der EP 1 048 751 gewählten antihaftenden PTFE-Schicht(Polytetrafluorethylen-) betrug 0,25 W/m·°K, d.h. sie war 13'000-mal geringer als diejenige der eingelagerten Minidiamanten. In Bezug auf eine Wärmeübertragung durch die Gesamtbeschichtung erreichten die "gut wärmeleitenden Punkte" nur eine sehr geringe Wirkung.

Die Erfindung geht nun von der Erkenntnis aus, dass eine gute Wärmeübertragung nur dann erreichbar ist, wenn gut wärmeleitende Partikel bis auf eine Berührungstoleranz, am Besten in direktem Kontakt mit dem "nackten" Geräteinnenboden, auf diesem aufliegen und diese Partikel bis auf eine Schichtaussenseitentoleranz an die Oberseite (= Aussenseite) der Oberfläche der gesamten Beschichtung reichen und somit auch einen guten Wärmekontakt mit dem Kochgeräteinnenboden und dem einzubringenden Kochgut haben.

Unter einer Berührungstoleranz wird ein äusserst geringer Abstand einer Partikelfläche gegenüber dem "nackten" Kochgeräteinnenboden verstanden. Dieser geringe Abstand kann sich ergeben, in dem ein "Hauch" von Schichtmaterial sich zwischen den "nackten" Geräteinnenboden und der betreffenden "Partikelauflagefläche" schiebt. Hierfür können z. B. Oberflächenspannungen oder auf dem noch unbehandelten Innenboden befindliche Filme verantwortlich sein. Die Berührungstoleranz liegt jedoch unter 1 μm, besser unter 0.7 μm, wobei hierbei Teilchen des Beschichtungsmaterials (z. B. des Primers, Antihaftbeschichtung, ...) eine Rolle spielen können.

Eine Berührungstoleranz von unter einem Mikrometer ergibt sich aus der Überlegung heraus, dass das Kochgut sowie auch der Kochgeräteinnenboden in der Regel auf eine Temperatur grösser 100°C (~ 400°K) gebracht wird. Eine "Schwarzkörperstrahlung" von 400 K hat eine maximale Wellenlänge von 7 μm. Eine Durchtunnelung von Strahlung ohne merklichen Verlust erfolgt bis etwa 10% der Wellenlänge. D. h. mit maximal 1 μm Berührungstoleranz ist immer noch eine gute Wärmeübertragung gegeben, da in der Regel die zu übertragende Temperatur zudem noch höher als 400 °K sein dürfte.

Die gut wärmeleitenden Partikel sollen gemäss Erfindung eine Dicke entsprechend der gesamten Schichtdicke aufweisen. Sofern es mehrere Schichten gibt, ist der Partikeldurchmesser in der Grössenordnung des gesamten Schichtpaketes. Aufgrund von Oberflächenspannung können die Partikelspitzen vom Schichtmaterial zufällig oder auch gewollt überzogen sein und dann auch über die Schicht bzw. das Schichtpaket überzogen herausragen. Überzieht die Oberflächenspannung einige oder alle Partikel nicht, so überragen diese die Schicht bzw. das Schichtpaket. Ein Überragen der wärmeleitenden Partikel über die Oberseite (= Aussenseite) der Beschichtung hinaus, d.h. ein Hineinragen in das Kochgut ergibt eine ausgezeichnete Wärmeübertragung vom Kochgeräteboden zum Kochgut, wobei für eine gute Wärmeübertragung eine Berührung der Oberseite der wärmeleitenden Partikel mit dem Kochgut ausreichend ist (bei der Herstellung sind Effekte der Oberflächenspannung zu beachten). Ein direkter Kontakt der Partikeloberseite mit dem Kochgut ist allerdings nur dann zulässig, wenn das Partikelmaterial auch antihaftende Eigenschaften besitzt, wie beispielsweise beim Diamanten. Zeigt das Partikelmaterial keine antihaftende Eigenschaft, wie beispielsweise bei Aluminium, so muss der der Schichtaussenseite benachbarte Teil z.B. des Aluminiumteils mit einer antihaftend wirkenden Schicht mit einer vorzugsweisen Schichtdicke von maximal 1 μm überzogen sein. Ein derartig dünner Überzug erfolgt durch Oberflächenspannungen, welche das antihaftend wirkende Material über die Partikel ziehen. Ein Hineinragen der Oberseite der wärmeleitenden Partikel in das Kochgut bzw. Enden der Oberseite unterhalb der Schichtaussenseite der Beschichtung, d.h. ein kleiner Abstand zum Kochgut wird durch den Begriff einer Schichtoberseitentoleranz definiert. Für eine negative Schichtaussenseitentoleranz, d.h. ein Liegen der Partikeloberseite unterhalb der Beschichtungsaussenseite gelten dieselben Überlegungen einer Tunnelung wie für die Berührungstoleranz.

Als wärmeleitende Partikel können nun Diamantkristalle (Wärmeleitfähigkeit 2300 W/m·°K bis 3300 W/m·°K) verwendet werden. Die hier angegebene Wärmeleitfähigkeit bezieht sich auf für Kochgeräte übliche Temperaturen zwischen 100 °C und 200 °C. Da, wie unten beschrieben, als Beschichtung ein zweischichtiges Schichtenpaket mit einer Schichtdicke zwischen 20 μm und 40 μm verwendet wird, wird man je nach gewählter Gesamtschichtdicke Diamanten mit einem Durchmesser von 20 μm bis 40 μm wählen, wobei die Diamanten zur Verbesserung der Wärmeleitfähigkeit und zur Verbesserung des Widerstandes gegen Abrasion auch geringfügig grösser sein dürfen.

Als wärmeleitende Partikel können auch Aluminiumpartikel (Wärmeleitfähigkeit 230 W/m·°K) verwendet werden. Bei Aluminium ist jedoch darauf zu achten, dass möglichst keine Oberflächenoxidation eintritt, da Oxide bereits schon bei den oben genannten Temperaturen einen deutlichen Rückgang der Wärmeleitfähigkeit bewirken würden. Ist die auf der Oberfläche des Aluminiumpartikels sich bildende Oxidationsschicht jedoch sehr dünn, kann auch eine Oxidation in Kauf genommen werden (Durchtunnelung). Um eine Oxidation des Aluminiumpartikels zu verhindern, sollte die das Partikel umgebende Schicht basisch sein und der Durchmesser des Partikels geringfügig, d.h. etwa 1 μm kleiner sein als die Schichtdicke bzw. die Dicke des gesamten Schichtpakets. Für einen Wärmedurchgang durch diese sehr dünnen Schichten gilt ebenfalls das oben gesagte betreffend einer Durchtunnelung.

Anstelle von Aluminium können auch andere, relativ gut wärmeleitende Materialien, wie Gold (314 W/m·°K; teuer, aber werbewirksam), Silber (429 W/ m·°K), Kupfer oder Siliziumcarbid (SiC) (350 W/ m·°K) verwendet werden. Siliziumcarbid hat nicht nur eine gute Wärmeleitfähigkeit, es ist zudem auch noch sehr hart (Mohs 9,6) und gibt damit der Beschichtung auch Abriebfestigkeit. D.h., Siliziumcarbid ist fast so hart wie Diamant, weist eine gute Wärmeleitfähigkeit auf, ist physiologisch unbedenklich und das auch noch bei sehr geringen Herstellungskosten.

Die Wärmeleitfähigkeit von Aluminium beträgt nur etwa 7% derjenigen des Diamanten. Da Aluminium bedeutend billiger ist als Diamant, wird man sich in vielen Fällen auch mit der geringeren Wärmeleitfähigkeit zufrieden geben.

Die Wärmeleitfähigkeit von Carbonnanoröhrchen liegt bei 6000 W/m·°K. Werden nun diese Röhrchen durch eine Additivierung mit Aluminiumpulver zusammen verarbeitet, verbessern sich die mechanischen Eigenschaften derartiger Aluminiumpartikel erheblich. Die Erhöhung der Wärmeleitfähigkeit richtet sich nach der Menge zugemischter Nanoröhrchen. Medizintechnische Ergebnisse liegen zwar noch nicht vor, es könnte jedoch sein, dass Nanoröhrchen, wenn sie beim Einatmen in die menschliche Lunge gelangen, Gesundheitsschäden verursachen. Ein Einatmen dieser Röhrchen ist jedoch bei einem derartig beschichteten Kochgerät nicht möglich, da diese Röhrchen im Beschichtungspaket gut fixiert sind. Ein eventueller Abrieb bei Verwendung eines Schabers würde, wenn überhaupt, nur Teilstücke herausarbeiten, welche jedoch im Kochgut hängen bleiben und somit lediglich in den Magendarmtrakt gelangen könnten und dort wie alles Kohlenstoffhaltige verdaut würden.

Eine Additivierung der Nanoröhrchen mit den weiter oben genannten Metallen Gold, Silber und Siliziumcarbid ist zur Verbesserung deren mechanischer Daten möglich. Wie unten ausgeführt wird, kann mit einer Additivierung von Gold und Silber zusätzliche eine antimikrobielle Wirkung erzielt werden. Neben Gold und Silber können zum Erhalt der antimikrobiellen Wirkung auch Platin (Pt), Palladium (Pd), Kupfer (Cu), Zinn (Sn), Antimon (Sb), Wismut (Bi) und/oder Zink (Zn) eingesetzt werden.

Anstatt Carbonnanoröhrchen mit Aluminium oder anderen Metallen zu additivieren, können diese Nanoröhrchen auch selbst als wärmeleitendes Element verwendet werden. Da die Nanoröhrchen sehr dünn sind - die Durchmesser liegen typischerweise bei 1 bis 50 Nanometern - ist es nur schwer möglich, sie auf dem Geräteinnenboden stehend bis annähernd zur Schichtaussenseite anzuordnen: Man wird deshalb die Nanoröhrchen mit dem Schichtmaterial derart aufsprühen, dass sich eine Matte aus Nanoröhrchen bildet. Es kann nun nach einer vorherigen Imprägnierung des Geräteinnenbodens diese Matte aufgelegt werden und diese Matte dann mit einem aushärtenden Antihaftmaterial durchtränkt werden. Anstelle einer Matte können in einem thermischen Aufsprühverfahren auch Mattenteile zusammen mit dem Antihaftmittel aufgesprüht werden. Vorzugsweise wird man jedoch Bündel von Nanoröhrchen dem Sprühstahl zugeben. Da hierbei die einzelne Nanoröhrchen in gutem mechanischen Kontakt zueinander liegen, ergibt eine derart hergestellte Beschichtung die gewünschte gute Wärmeleitfähigkeit durch die gesamte Beschichtung hindurch.

Anstatt Nanoröhrchen als Matten oder "Filze" aufzubringen, können die Nanoröhrchen auch mit einem elektrostatischen Nasslackverfahren mit sehr hoher Spannung ausgerichtet auf den Geräteinnboden aufgebracht werden.

Über eine Materialauswahl der durch die Schicht hindurchreichenden Elemente sowie deren Dichte in der antihaftend wirkenden Schicht kann nun der Wärmedurchgang durch diese Schicht eingestellt werden. Eine derartige Einstellung kann zudem durch Mischung der oben angeführten unterschiedlichen Materialien erfolgen. Es können somit Diamantkristalle mitAluminiumpartikeln, welche vorzugsweise eine Additivierung mit Carbonnanoröhrchen aufweisen, vermischt werden. Auch kann eine Vermischung derart erfolgen, dass teuere Partikel mit preisgünstigeren vermischt werden. Eine z. B. fehlende Abrasionsfestigkeit kann durch ein Hinzumischen eines harten Materials, insbesondere im oberen Beschichtungsbereich erreicht werden. Zur Erhöhung der Abrasionsfestigkeit eignet sich insbesondere Siliziumcarbid alleine oder auch als Zumischung.

Eine Abgleichung des Wärmedurchgangs in der antihaftend wirkenden Beschichtung sollte derart erfolgen, dass der Wärmedurchgang durch die Schicht in derselben Ordnung liegt, wie der Wärmedurchgang durch das Bodenmaterial des Kochgerätes. Ein zu hoher Wärmedurchgang durch die Beschichtung bringt nichts, da der Boden nicht genug Wärme nachliefert. Ein zu geringer Wärmedurchgang durch die Beschichtung in bezug auf den Kochgeräteboden ist jedoch zu vermeiden, da dann ein Wärmestau in der Schicht erfolgen könnte.

Als Anhaltswert für zu verwendende gut wärmeleitende Partikel in der aufzubringenden Beschichtung ist davon auszugehen, dass eine Beschichtung pro Flächeneinheit ein bis zehn Prozent des gut wärmeleitenden Materials enthalten sollte.

Bei einem Kochgerät, insbesondere bei einer Pfanne spielen beim Erwärmungsprozess Bakterien, Viren, Hefen und Pilze keine Rolle, da sie durch den Erwärmungsprozess, der in der Regel immer 100°C überschreitet, abgetötet werden. Oftmals werden jedoch in diesen Geräten noch aufzubereitende oder bereits gekochte, gedünstete oder gebratene Gerichte stehen gelassen. Diese Gerichte, d.h. das "Kochgut" sind bzw. ist kalt oder kühlt ab und Bakterien, Viren, Hefen sowie Pilze finden einen idealen Nährboden und vermehren sich. Diese Vermehrung kann nun unterbunden werden, wenn zusätzlich zu den wärmeleitenden Partikeln antimikrobiell wirkende Teilchen in die Beschichtung eingelagert sind und die Teilchen aus der Beschichtung über die Beschichtungsaussenseite hervorstehen. Als antimikrobiell wirkende Teilchen können Silber (Ag), Gold (Au), Platin (Pt), Palladium (Pd), Kupfer (Cu), Zinn (Sn), Antimon (Sb), Wismut (Bi) und/oder Zink (Zn) als reine Stoffe, Legierungen oder metallorganische Verbindungen verwendet werden. Als Legierung hat sich z. B. CuZn21 Si3P und CuZn23Al3Co bewährt.

Diese antimikrobiell wirkenden Stoffe wird man als Teilchen in die auf den Kochgeräteinnenboden liegende Beschichtung neben den gut wärmeleitenden Partikeln integrieren.

Es ist zwar unwahrscheinlich, dass diese Teilchen aus der Beschichtung während des Gebrauchs herausgearbeitet werden, es wird aber dennoch eine Teilchengrösse von etwa 10 μm gewählt. Derartig "grosse Teilchen diffundieren nicht mehr durch die menschliche Haut. Als Konzentration der Teilchen in der Beschichtung sind 0,05 bis 0,5% angezeigt, d.h. 50 Teilchen pro $mm^2$.

Die antimikrobiellen Teilchen dürfen nicht überdeckt werden, da ansonsten keine antimikrobielle Wirkung gegeben ist. D.h. die antimikrobiellen Teilchen müssen die Beschichtungsaussenfläche überragen um einen direkten Kontakt mit dem Kochgut zu haben.

Im Gegensatz zu den gut wärmeleitenden Partikeln müssen zusätzlich zu diesen die antimikrobiell wirkenden Teilchen in die Beschichtung derart eingelagert sein, dass wenigstens eine Seite der Teilchen aus der Beschichtung über die Beschichtungsaussenseite hervorsteht. Nur so ist eine antimikrobielle Wirkung (oligodynamischer Effekt) gegenüber dem Kochgut entfaltbar. Wählt man für die antimikrobielle Wirkung Elemente, Verbindungen und Legierungen mit einer guten Wärmeleitung, welche z. B. Silber oder Kupfer enthalten, so können hierdurch gleich zwei Effekte (gute Wärmeübertragung zwischen Geräteinnenboden und Kochgut und eine antimikrobielle Wirkung auf das Kochgut) vereint werden.

Da die die Beschichtungsaussenseite überragenden Partikel- bzw. Teilchenoberseiten ein "Raster" mit Mikro- und Submikrometerabständen erzeugen, ist diese Beschichtungsaussenseite zudem selbstreinigend (siehe Lotusblätter, Kohlrabiblätter, etc.).

**Kurze Beschreibung der Zeichnungen**

Die zur Erläuterung von Ausführungsbeispielen der Erfindung verwendeten Zeichnungen zeigen hier in einer lediglich schematischen, nicht massstabsgerechten Darstellung in

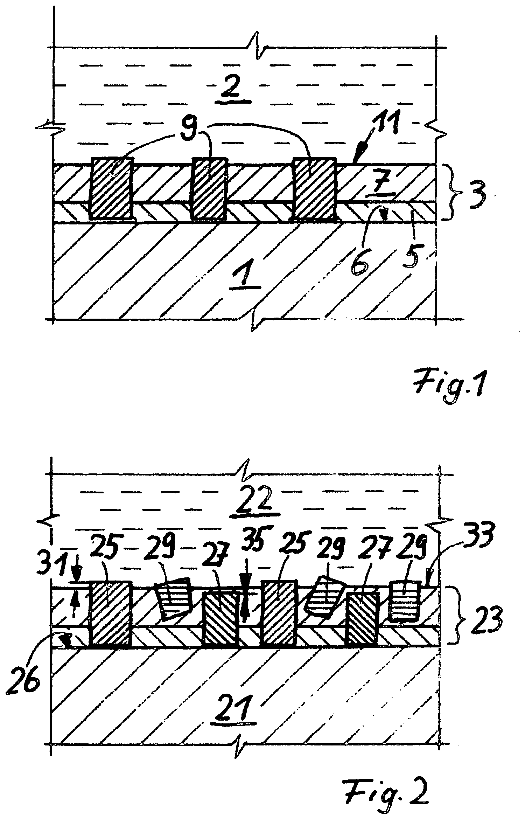

Fig. 1 einen Querschnitt durch ein erfindungsgemäss beschichtetes Kochgerät mit einer gut wärmeleitenden Beschichtung, in der beispielsweise Diamantkristalle liegen, welche einen guten, direkten Wärmekontakt mit einer nackten Oberfläche eines Kochgeräteinnenboden haben, wobei diese Diamantkristalle die Beschichtungsaussenseite geringfügig überragen bzw. direkt in der Ebene der Beschichtungsaussenseite liegen und somit auch einen guten Wärmekontakt zum darüber sich befindenden Kochgut haben, und in

Fig. 2 einen zu **Figur 1** analogen Querschicht, wobei hier in der Beschichtung zusätzlich zu den Diamantkristallen ebenfalls gut wärmeleitende Aluminiumpartikel vorhanden sind, welche jedoch zur Beschichtungsaussenseite von einer die Aluminiumpartikel gegen Oxidation schützenden, dünnen Schicht überdeckt sind, sowie auch antimikrobiell wirkende Teilchen vorhanden sind, welche in der Beschichtungsaussenseite enden bzw. diese geringfügig überragen und somit mit dem Kochgut in direktem Kontakt stehen.

**Wege zur Ausführung der Erfindung**

Es wird hier zuerst lediglich eine sehr gut wärmeleitende Beschichtung beschrieben, dann eine antimikrobielle Beschichtung und anschließend eine Kombination beider Beschichtungen, um eine gute Wärmeleitfähigkeit zusammen mit einer antimikrobiellen Wirkung zu erhalten.

Die in **Figur 1** gezeigte Beschichtung für eine gute Wärmeübertragung zeigt einen im Querschnitt dargestellten Bereich eines Kochgerätebodens **1** als Ausschnitt eines für zu erwärmendes Kochgut **2** antihaftend beschichtetes Kochgeräts **4**. Als Kochgeräte **4** werden hier insbesondere Töpfe und Pfannen verstanden. Im Allgemeinen ist das Bodenmaterial des Kochgerätes **4** ein gut wärmeleitendes Material, wie beispielsweise Aluminium; es könnte jedoch auch Stahl oder Gusseisen als weniger gut wärmeleitendes Material verwendet werden. Die Oberfläche **6** des Kochgerätebodens **1**, d.h. des Kochgeräteinnenbodens **2** hat eine Rauhigkeit zwischen 15 $\mu$m und 30 $\mu$m. Vorzugsweise wird man eine Rauhigkeit von etwa 20 $\mu$m wählen. Die Angabe der Rauhigkeit ist definiert als Höhendifferenz zwischen der höchsten Erhebung und der tiefsten Ausbuchtung. Wie nachfolgend ausgeführt ist, wird die Rauhigkeit vorzugsweise durch Sandstrahlen mit einem groben und einem feinen Korundpulver erzeugt, wodurch auf dem Boden eine grobe Struktur mit durchschnittlich 5 bis 10 "Erhebungen" pro Millimeter entsteht, der eine Feinstruktur von durchschnittlich 100 bis 30 "Erhebungen" pro Millimeter überlagert ist. In den **Figuren 1** und **2** ist somit die Rauhigkeit, da sie in ihren Abmessungen gegenüber den Abmessungen von in die Beschichtung **3** einzulagernden Partikeln und Teilchen nahezu vernachlässigbar ist, nicht eingezeichnet. Eine antihaftend wirkende Beschichtung **3** hat unmittelbar auf dem aufgerauten Innenboden **6** liegend einen dünnen Primer **5** und über diesem eine antihaftend wirkende Schicht **7**. Der sehr dünne Primer **5** hat eine Schichtdicke typischerweise zwischen **2** $\mu$m und 10$\mu$m, vorzugsweise wird man eine Schichtdicke von **5** $\mu$m wählen. Die Antihaftschicht **7** weist typischerweise eine Schichtdicke zwischen **15** $\mu$m und 30 $\mu$m auf; vorzugsweise wird man eine Schichtdicke von etwa 20 $\mu$m wählen. In beide Schichten **5** und **7** sind wärmeleitende Partikel **9** mit einer Wärmeleitfähigkeit grösser 200 W/m·°K eingelagert. Die Oberfläche der Beschichtung **3** folgt im Grossen und Ganzen dem Profil der groben Rauhigkeit mit einer Profilüberlagerung durch die einzulagernden Partikel und Teilchen.

Die Grösse sowie die Lage der Partikel in der Beschichtung **3** ist derart, dass sie auf dem Kochgeräteinnenboden **6** direkt, d.h. mit einem mechanischen Kontakt aufliegen. Ein direkter mechanischer Kontakt ist jedoch nur schwer erreichbar, da sich oftmals ein dünnes Häutchen durch Atmosphäreneinflüsse bildet. Auch kann Material des Primers **5** "unter die wärmeleitenden Partikel **9** kriechen". Atmosphäreneinflüsse können weitgehend durch eine Schutzgasatmosphäre während der Beschichtung vermieden werden. Es hat sich nun herausgestellt, dass mit einer Berührungstoleranz von weniger als 7 $\mu$m, d h. weniger als etwa 10% der gesamten Dicke der Schicht **3** eine gute Wärmeeinkopplung in die wärmeleitenden Partikel **9** gegeben ist. Als Berührungstoleranz wird ein tolerierbarer Abstand der Unterseite **10** der wärmeleitenden Partikel **9** zum nackten Kochgeräteinnenboden **6** verstanden. Eine Abschätzung zur Berührungstoleranz ist eingangs angeführt.

Als Schichtaussenseitentoleranz wird eine Toleranz verstanden, welche angibt, ob die Oberseite der wärmeleitenden Partikel genau in der Sichtaussenseite liegt (Toleranz null), über die Schicht hinausragt (positive Toleranz) oder unterhalb der Schichtaussenseite zu liegen kommt (negative Toleranz). Es wir hier je nach verwendeten Materialien von einer Schichtaussenseitentoleranz von $\pm$10% ausgegangen. Wie unten beschrieben, ist die Schichtaussenseitentoleranz bei einer Verwendung von Diamanten möglichst grösser null zu verwenden; sie kann aber auch negativ sein (Durchtunnelung). Bei z. B. Aluminium und deren Verbindung sollte die Schichtaussenseitentoleranz negativ sein.

In dem in **Figur 1** dargestellten Ausschnitt eines Pfannenbodens **1** werden als wärmeleitende Partikel **9** Diamanten verwendet.

Wie viel Diamanten müssen nun in eine antihaftend wirkende Beschichtung zugegeben werden, um gesamthaft eine gute sowie auch ausreichende Wärmeübertragung durch die Beschichtung **3** zu erreichen? Hierzu soll die nachfolgende Überschlagsrechnung Anhaltspunkte liefern.

Als antihaftend wirkende Beschichtung wird vorzugsweise eine im Wesentlichen Polytetrafluorethylen (PTFE) enthaltende Beschichtung **7** gewählt. Die Beschichtung **7** enthält zudem, je nach Rezeptur, weitere Materialien im Prozentbereich. Der Primer **5** enthält ebenfalls PTFE, jedoch in einer geringeren Konzentration. Der Primer enthält zudem noch wesentliche Anteile von Perfluoralkyd, Siliziumdioxyd und Polyamidimid. Je nach Rezeptur können weitere Stoffe im Prozentbereich, wie z. Farbpigmente, enthalten sein.

Die Wärmeleitfähigkeit der Schichten **5** und **7**, vorerst ohne gemäss Erfindung eingebrachte gut wärmeleitende Partikel, beträgt etwa 0,25 W/m·°K. D.h. die Wärmeleitfähigkeit der Schichten **5** und **7** ist etwa um den Faktor 1000 (genau rechnerisch 944) mal kleiner als diejenige des Materials des nackten Aluminiuminnenbodens **1** (236 W/m·°K). Um wenigstens dieselbe Wärmeübertragung durch die Schichten **5** und **7** wie durch den Geräteboden **1** zu erhalten, sollte die Wärmeübertragung der beiden Schichten erfindungsgemäss entsprechend den nachfolgenden Überlegungen erhöht werden.

Es wird hier beispielsweise von einer Gesamtschichtdicke (Beschichtung **5** und **7**) von 25 μm ausgegangen. Die Dicke des Kochgerätebodens aus Aluminium wird mit 5 mm angenommen. Für ein Wärmedurchgangsverhältnis pro Flächeneinheit von Beschichtung zu Kochgeräteboden ergibt sich Folgendes überschlagsmässig:

$$\frac{\text{Beschichtung}}{\text{Alu-Boden}} = \frac{0{,}25 \cdot 5 \cdot 10^{-3}}{25 \cdot 10^{-6} \cdot 236} = \frac{0{,}212}{1}$$

D.h. um gleichen Wärmedurchgang zu erhalten, sollte nun die Wärmeübertragung der Beschichtung um den Faktor 5, d.h. auf 1 W/m·°K erhöht werden.

Da die Gesamtschichtdicke 25 μm beträgt werden zur Erhöhung der Wärmeübertragung Diamanten mit einem Durchmesser von etwa 25 μm - hier beispielsweise mit einer Wärmeleitfähigkeit von 2300 W/m·°K - zugegeben. Für die Einheitsschichtfläche gilt somit

$$0{,}25 \cdot F_S + 2300 \cdot F_D = 1,$$

wobei $F_D$ die mit Diamanten belegte Fläche und $F_S$ die restliche Schichtfläche ist.

$F_D$ + $F_S$ ergeben zusammen die Einheitsfläche, d.h. "1".

Es gilt somit $(1-F_D) \cdot 0{,}25 + F_D \cdot 2300 = 1$

Hieraus ergibt sich, dass im Idealfall die Beschichtung flächenmässig einen Anteil von 0,0000326 Diamanten enthalten sollte. Da nun beim Beschichtungsprozess die Diamanten nicht in der optimalen Lage auf dem nackten Kochgeräteinnenboden **6** und in der Beschichtung liegen, wird ein Wirkungsgrad hierfür von 0,1 bis 0,3 angenommen. Bei einem Wirkungsgrad von 0,1 wird somit ein Anteil von 0,000326 Diamanten benötigt. Wird überschlagsmässig von Diamanten mit Abmessungen von 25 μm · 25 μm, also 625 · 10⁻⁶ mm² ausgegangen, so werden pro 1 mm² [1/(625 · 10⁻⁶)] ·0,000326 Diamanten in der Schicht benötigt, was 326/625 = 0,522 Diamanten ergibt. D.h. es werden nur wenig Diamanten benötigt, um den gewünschten Effekt zu erreichen. Es sei hier allerdings bemerkt, dass es sich nur um eine Überschlagsrechnung handelt; um sicher zu gehen, sollte der Anteil Diamanten jedoch um den Faktor 10 erhöht werden. Zu viel eingebrachte Diamanten schaden nicht, können jedoch das Produkt verteuern. Man sollte deshalb eine gute experimentelle Überprüfung vornehmen.

In der Regel sind Diamanten teuer. In den hier vorgeschlagenen Abmessungen sind Diamanten jedoch nicht für Schmuckzwecke, sondern nur industriell verwendbar; auch ist hier nicht das Aussehen der Diamanten, sondern es sind nur ihre physikalischen Eigenschaften ausschlaggebend. Derartige Diamanten sind in der Regel preisgünstig erhältlich. Zur Preisreduktion können jedoch als Ersatz für die Diamanten auch Aluminiumpartikel verwendet werden. Aluminium hat jedoch gegenüber Diamant eine etwa zehnfach kleinere Wärmeleitfähigkeit, ist nicht antihaftend, und ist von der Härte der Diamanten weit entfernt. Werden Diamanten durch Aluminiumpartikel ersetzt, so müssen zum Erreichen einer ausreichend hohen Abriebfestigkeit Kristalle bzw. Partikel hoher Härte zugesetzt werden. Hierzu kann z. B. Korund, Siliziumcarbid und artverwandte Materialien verwendet werden.

Da Aluminium nur 1/10 der Wärmeleitfähigkeit von Diamanten hat, muss gegenüber Diamanten die zehnfache Menge an Aluminium Teilchen eingebracht werden, also knapp 5 Teilchen pro mm². Da Aluminium nicht, wie Diamant, antihaftend ist, müssen die Aluminiumpartikel etwas kleiner als die Gesamtschichtdicke gewählt werden und jeweils unterhalb der Aussenseite der Gesamtbeschichtung zu liegen kommen. Die Aluminiumpartikel müssen jeweils mit einem antihaftendwirkenden Schichtbereich überzogen sein. Da nun die Aluminiumpartikel mit einer dünnen "schlechtwärmeleitenden" Schicht überzogen sind, muss der Anteil von Aluminiumpartikel gegenüber der Überschlagsrechnung geringfügig erhöht werden. Erfahrungsgemäss sollte von 50 Aluminiumpartikel pro 1 mm² ausgegangen werden, um auf der sicheren Seite zu liegen. Dies ergibt eine Flächenbelegung mit Aluminiumpartikeln von etwa 3%.

Da die Aluminiumpartikel möglichst auch nicht oxidieren sollten - Aluminiumoxid ist ein schlechter Wärmeleiter - sollte die die Aluminiumpartikel umgebende, antihaftend wirkende Schicht, einen basischen Charakter aufweisen.

Die Aluminiumpartikel können nun rund als Kügelchen oder auch als Spaltprodukte eckig ausgebildet sein. In den hier beschriebenen Beispielen haben sich eckige Aluminiumpartikel besser als kugelförmige bewährt.

Aluminiumpartikel haben gegenüber Diamanten mit Blick auf die Wärmeleitfähigkeit und die Härte schlechtere Eigenschaften. Die Wärmeleitfähigkeit von Aluminiumpartikeln kann jedoch wesentlich durch eine Additivierung mit Carbonnanoröhrchen verbessert werden. Nicht nur die Wärmeleitfähigkeit wird verbessert, auch die Festigkeit, welche bis zu derjenigen von Stahl gesteigert werden kann. Als hierzu beispielsweise verwendbares Firmenprodukt seien Baytubes der Firma Bayer MaterialSciences erwähnt.

Carbonnanotubes haben eine Wärmeleitfähigkeit von etwa 6000 W/m·°K, also etwa den doppelten Wert von Diamanten. Die mit Carbonnanoröhrchen additivierten Aluminiumpartikel kommen somit in die Nähe der Wärmeleitfähigkeit des Diamanten.

Anstatt Carbonnanotubes (Carbonnanoröhrchen) zur Additivierung von Aluminiumpartikeln zu verwenden, können diese Nanotubes auch direkt in die antihaftend wirkende Beschichtung integriert werden. Carbonnanotubes sind sehr dünne Röhrchen, wobei schon Verhältnisse von 1: 132'000'000 für ein Längen- zu Durchmesserverhältnis der Röhrchen erreicht worden sind. Nanotubes haben einen Durchmesser von etwa einem Nanometer und können bis zu einigen Mikrometern oder gar Millimetern lang sein. Aufgrund der in unserem Verwendungszweck guten Wärmeleitfähigkeit können nun die "Tubes" zusammen mit dem Schichtmaterial auf den Kochgeräteboden aufgesprüht werden. Ein Aufsprühen kann derart erfolgen, dass Teile aus einer "Nanotube-Matte" bzw. Bündel von Nanotubes oder die Nanotubes alleine aufgesprüht werden.

Um die Carbonnanotubes annähernd senkrecht zur Kochgeräteinnenbodenoberfläche stehend aufzusprühen kann man ein elektrostatisches Nasssprühverfahren verwenden. Hierbei wird das Kochgerät geerdet und ein elektrisch leitender Lack als antihaftendes Beschichtungsmaterial mit einer sehr hohen Spannung (20 kV bis 100 kV) auf den aufgerauten Kochgeräteinnenboden aufgesprüht. Die mit dem "Lack" aufgesprühten Nanoröhrchen stehen dann mehr oder weniger senkrecht auf dem Kochgeräteinnenboden.

Zur Erzeugung der Beschichtung auf dem Kochgeräteinnenboden **1** wird dieser entfettet und mit einem abrasiven Mittel sandgestrahlt. Aus preislicher Sicht wird man zum Sandstrahlen in der Regel Korundpulver verwenden. Das Korundpulver hat eine feine Körnung, dem grobe Körner beigemischt sind. Mit den groben und feinen Körner wird eine grob aufgeraute Struktur mit einer feinen Unterstruktur erzeugt. Die Oberfläche **6** des Kochgeräteinnenbodens **1** hat eine grobe Struktur von etwa ein- bis zweihundert Mirkometern, der eine Feinstruktur mit etwa zehn bis dreissig Mikrometern überlagert ist.

Nach dem Aufrauen wird in einem Nasssprühverfahren eine Primerschicht aufgebracht. Beim Aufbringen der Primerschicht werden bereits je nach beabsichtigter Verwendung die oben erwähnten, wärmeleitenden Partikel mit aufgebracht. Das Material für die Primerschicht enthält im Wesentlichen Polytetrafluorethylen, Perfluoralkyd, Siliziumdioxid und Polyamidimid; weitere Zusatzstoffe werden je nach benötigten Fliessansprüchen zugefügt.

Auf diesen Primer folgt eine die wärmeleitenden Partikel seitlich bzw. auch oberflächlich umhüllende antihaftend wirkende PTFE-Schicht mit wesentlichen Bestandteilen aus Polytetrafluorethylen, Perfluoralkyd und Farbpigment; weitere Zusatzstoffe im Prozentbereich können enthalten sein. Der Anteil von Polytetrafluorethylen ist hier etwa fünf bis sechs mal so hoch wie in der Primer-Schicht.

Die Antihaftschicht kann auch im Wesentlichen ein Solgel sein, bzw. aus Silikaten oder Silikon aufgebaut sein. Die wärmleitenden Partikel sind dann von einem derartigen Material umschlossen. Das Solgel enthält im Wesentlichen amorphes Siliziumdioxid, Alkyltrialkoxysilan und Silikonkarbidpulver. Das Solgel wird in mehreren Schichten nass in nass aufgebracht. Eine jeweils aufgebrachte Schicht dunstet nur ganz kurz ab; die nächste Schicht wird dann auf diese noch nasse Schicht aufgesprüht. Es wird hier nicht mehr zwischen Primer und der darauf liegenden, insbesondere antihaftend wirkenden Schicht unterschieden; beide Schichten sind eins. Die gesamte Schichtdicke variiert je nach Verwendung zwischen 2 μm und 15 μm. Die fertige Beschichtung wird anschliessend bei ca. 200 °C gesintert.

Da die Solgelschicht gegenüber der eingangs beschrieben Beschichtung (Primer + Antihaftbeschichtung mit einer Gesamtschichtdicke zwischen 20 μm und 40 μm) dünner ist, sind die einzulagernden wärmeleitenden Partikel je nach gewählter Schichtdicke zwischen etwa 2 μm und 15 μm zu wählen. Bei der Solgelschicht ist von einer Wärmeleitung im Bereich von etwa 0,2 W/m·°K bis 0,4 W/m·°K, also analog zu den eingangs angegebenen Werten, auszugehen. Da jedoch die Schichtdicke nun geringer ist, verringert sich auch der Prozentsatz einzulagernder wärmeleitender Partikel.

Sollte aus irgendwelchen Gründen auf die Einlagerung wärmeleitende Partikel verzichtet werden, so kann eine antihaftend wirkende Beschichtung auf einem Kochgeräteinnenboden auch als Solgel ausgeführt werden.

Das Beschichtungsmaterial muss die in der Grössenordnung der Schichtdicke befindlichen gut wärmeleitenden Partikel sehr gut fixieren, damit diese beim späteren Gebrauch des Kochgerätes nicht durch einen Schaber, Löffel etc., wie er beim Erwärmen zum Wenden und Rühren des Kochgutes verwendet wird, im Gebrauchszeitraum herausgearbeitet (herausgerieben) werden. Der Schaber, der Löffel etc. greift schliesslich direkt am Partikel bzw. in dessen unmittelbarer Umgebung an. Mit den oben beschriebenen Beschichtungen wurden zufriedenstellende Ergebnisse erzielt. Gemäss den untenstehenden Ausführungen können weitere Beschichtungen mit den dort angeführten Eigenschaften eingesetzt werden.

Entsprechend den definierten Kochgeräteeigenschaften muss die Beschichtung eine antihaftende Wirkung zeigen. Sie muss aber auch die Partikel, insbesondere seitlich, sehr gut fixieren. D.h., die Beschichtung darf im Laufe der Zeit durch Alterung nicht schrumpfen. Auch muss die Beschichtung eine ausreichende Elastizität und Kohäsion gegenüber den Partikeln aufweisen. Ferner muss die Beschichtung eine ausreichende Abrasionsresistenz haben. Diese Resistenz kann durch Beimischungen von harten Teilchen erreicht bzw. erhöht werden. Sofern möglich, kann durch "Kristallzieheffekte" erreicht werden, dass nicht nur glatte Kristallseitenflächen erzeugt werden, sondern die Kristalle (= Partikel) seitlich Mikroausstülpungen, d.h. Kristallgitterversetzungen aufweisen, welche eine gute Verzahnung in der Schicht bewirken.

Eine Fixierung der Partikel lässt sich insbesondere mit dem Primer erreichen, wobei im Primer z. B. enthaltene Amine die Partikel gut festhalten. Bei Kristallen mit sehr glatten Wänden, d.h. ohne wesentliche Kristallgitterversetzungen, sollte deshalb die Schichtdicke des Primers vergrössert werden (etwa bis zu einer Dicke von 10 $\mu$m). Der Primer ist dann, um eine ausreichende Antihaftwirkung beim Kochgerät zu erreichen, wenigstens mit einer Schichtdicke von 10 $\mu$m, mit einem antihaftend wirkenden Material zu überdecken.

In **Figur 2** ist im Querschnitt eine Beschichtung **23** eines Kochgeräts **24** mit einer guten Wärmeübertragung von dessen auf dessen Oberfläche **26** liegendem Kochgut **22** zum Innenboden **21** dargestellt. Analog zur Beschichtung **3** in **Figur 1** sind auch hier eine Primerschicht **25** und eine Antihaftschicht **27** vorhanden. Im Gegensatz zu **Figur 1** sind in der Beschichtung **23** jedoch Diamantpartikel **25** und Aluminiumpartikel **27** für die Wärmeleitung sowie Silber- bzw. Silberlegierungsteilchen **29** für eine antimikrobielle Wirkung eingelagert. Die Diamant- und Aluminiumpartikel **25** und **27** liegen mit einer möglichst gegen null gehenden Berührungstoleranz auf der nackten Innenbodenoberfläche **26** auf. Die Diamantpartikel **25** stehen mit einer Beschichtungsaussenseitentoleranz **31** über die Beschichtungsaussenseite **33** hervor. Beschichtungsaussenseitentoleranz **31** darf gegen null gehen, sollte aber (kann aber) bei Diamantpartikeln nicht negativ werden. Die Aluminiumpartikel **27** dürfen, wie oben ausgeführt, die Beschichtungsaussenseite **33** nicht überragen; sie haben eine negative Beschichtungsaussenseitentoleranz **35**. Die mit einer antimikrobielen Wirkung eingelagerten Teilchen **29** (z.B. Silber, Silberverbindungen bzw. -legierungen) müssen auf jeden Fall die Beschichtungsaussenseite **33** überragen (positive Beschichtungsaussenseitentoleranz), sie benötigen jedoch keinen Kontakt mit der Innenbodenoberfläche **26**. Werden jedoch antimikrobielle Teilchen verwendet, welche Silber oder einen anderen guten Wärmeleiter als Element enthalten, so wäre eine wenigstens annähernd direkte Berührung der Innenbodenoberfläche **26** zur Erhöhung der Wärmeübertragung von Vorteil.

**Patentansprüche**

1. Ein zum Erwärmen von einzubringendem Kochgut **(2, 22)** dienendes Kochgerät **(4, 24)** mit einer antihaftend wirkenden Beschichtung auf dem Kochgeräteinnenboden **(6, 26)**, wobei die Beschichtung **(3,23)** wärmeleitende Partikel **(9, 25, 27)** mit einer Wärmeleitfähigkeit grösser 200 W/m·°K aufweist, **dadurch gekennzeichnet, dass** um eine direkte, ausgezeichnete Wärmeübertragung vom Kochgeräteinnenboden **(6, 26)** zum Kochgut **(2, 22)** zu gewährleisten die Abmessungen der Partikel **(9, 25, 27)** derart sind, dass die Partikel **(9, 25, 27)** eine Dicke entsprechend der gesamten Schichtdicke aufweisen, und sofern es in der Beschichtung mehrere Schichten gibt, der Partikeldurchmesser in der Grössenordnung des gesamten Schichtpaketes ist, wobei die Partikel **(9, 25, 27)** mit einer Berührungstoleranz unter 1 $\mu$m zum unbehandelten "nackten" Innenboden **(6, 26)**, am Besten im direkten Kontakt aufliegen, und bis an die Oberfläche der gesamten Beschichtung mit einer Schichtaussenseitentoleranz von +/- 10% reichen.

2. Kochgerät **(4, 24)** nach Anspruch 1, **dadurch gekennzeichnet, dass** die Partikel Diamantkristalle **(9)** sind, wobei Partikelspitzen der Diamantkristalle die Aussenseite der Beschichtung **(3, 23)** mit einer Schichtaussenseitentoleranz **(31)** von bis zu 10% der gesamten Schichtdicke überragen.

3. Kochgerät **(24)** nach Anspruch 1 oder 2, **dadurch gekennzeichnet, dass** die Partikel Aluminiumpartikel **(27)** sind, bevorzugt Aluminiumpartikel mit einer Additivierung mit Carbonnanoröhrchen, wobei die Aluminiumpartikel **(27)** vorzugsweise eine eckige Ausbildung haben, und die Abmessungen der Aluminiumpartikel derart sind, dass sie unterhalb zur Beschichtungsaussenseite **(11, 33)** mit der Schichtaussenseitentoleranz **(35)** von weniger als 10% zu liegen kommen und die Beschichtung einen basischen Charakter hat, um eine Oxydation der Aluminiumpartikel **(27)** zu vermeiden.

4. Kochgerät nach einem der Ansprüche 1 bis 3, **dadurch gekennzeichnet, dass** die Partikel **(9, 25, 27)** aus Siliziumcarbid bestehen.

5. Kochgerät nach einem der Ansprüche 1 bis 4, **dadurch gekennzeichnet, dass** die Partikel eine Matte bildende Carbonnanoröhrchen sind, und die Matte bis zur Beschichtungsaussenseite **(11, 33)** mit der Schichtaussenseitentoleranz von weniger als 10% reicht, und die Matte vom Beschichtungsmaterial der Beschichtung durchtränkt und geringfügig überdeckt ist.

6. Kochgerät nach einem der Ansprüche 1 bis 5, **dadurch gekennzeichnet, dass** das Beschichtungsmaterial der Beschichtung im Bereich der Schichtaussenseite abrasivresistente harte Partikel, vorzugsweise Siliziumkarbid, enthält.

7. Kochgerät **(24)** nach einem der Ansprüche 1 bis 6, **dadurch gekennzeichnet, dass** zusätzlich zu den wärmeleitenden Partikeln **(9, 25, 27)** antimikrobiell wirkende Teilchen **(29)** in die Beschichtung **(23)** eingelagert sind und die Teilchen **(29)** aus der Beschichtung **(23)** über die Beschichtungsaussenseite **(33)** hervorstehen, um ihre antimikrobielle Wirkung gegenüber dem Kochgut **(22)** entfalten zu können.

8. Kochgerät nach Anspruch 7, **dadurch gekenn-**

zeichnet, dass antimikrobiell wirkende Teilchen **(29)** Silber (Ag), Gold (Au), Platin (Pt), Palladium (Pd), Kupfer (Cu), Zinn (Sn), Antimon (Sb), Wismut (Bi) und/oder Zink (Zn) als reine Stoffe, Legierungen oder metallorganische Verbindungen sind.

9. Kochgerät **(4, 24)** nach einem der Ansprüche 1 bis 8, **dadurch gekennzeichnet, dass** das beschichtete Kochgerät **(4, 24)** eine zweischichtige Beschichtung **(3, 23)** hat und direkt auf dem Kochgeräteinnenboden **(6, 26)** ein sehr dünner Primer **(5)**, vorzugsweise mit einer Dicke im Mikrometerbereich, liegt, der vorzugsweise wesentliche Anteile von Polytetrafluorethylen, Perfluoralkyd, Siliziumdioxid und Polyamidimid enthält, und der Primer **(5)** mit einer weiteren Schicht **(7)** überdeckt ist, welche insbesondere wesentliche Anteile von Perfluoralkyd und Netzmitteln sowie einen **4** bis 6-mal höheren Anteil an Polytetrafluorethylen als der Primer **(5)** enthält.

## Claims

1. A cooking device **(4, 24)** serving to heat up a cooked item *(2, 22)* placed in it, having a non-stick coating on the cooking device inner base **(6, 26)**, whereby the coating **(3, 23)** comprises thermally conductive particles **(9, 25, 27)** with a thermal conductivity of greater than 200 W/m·°K, **is characterised in that** the size of the particles **(9, 25, 27)** have a thickness equivalent to the entire coating thickness in order to ensure direct, excellent thermal transmission from the cooking device inner base **(6, 26)** to the cooked item **(2, 22)**, and provided that there exist several layers in the coating (3,23), the particle diameter is of an order of magnitude of the entire layer packet, whereby the particles **(9, 25, 27)** having a contact tolerance of less than 1 μm to the untreated "naked" inner base **(6, 26)**, are preferably in direct contact with said inner base **(6, 26)** and extend up to the surface of the entire coating with an exterior layer tolerance of +/-10%.

2. Cooking device **(4, 24)** according to Claim 1, **characterised in that** the particles are diamond crystals **(9)**, whereby particles peaks of the diamond crystals extend beyond the exterior of the coating **(3, 23)** with an exterior layer tolerance **(31)** of up to 10% of the total layer thickness.

3. Cooking device **(24)** according to Claim 1 or 2, **characterised in that** the particles are aluminium particles **(27)**, preferably aluminium particles with the addition of carbon nanotubes, whereby the aluminium particles **(27)** preferably have a rectangular shape, and the dimensions of the aluminium particles are such that they come to rest below the coating exterior **(11, 33)** at an exterior layer tolerance **(35)** of less than 10% and the coating has an alkaline nature in order to prevent the aluminium particles **(27)** from oxidation.

4. Cooking device according one of the Claims 1 to 3, **characterised in that** the particles **(9, 25, 27)** consist of silicon carbide.

5. Cooking device according to one of the Claims 1 to 4, **characterised in that** the particles are carbon nanotubes forming a mat and said mat extends to the coating exterior **(11, 33)** with an exterior layer tolerance of less than 10% and said mat is impregnated by the coating material, slightly covering it.

6. Cooking device according to one of the Claims 1 to 5, **characterised in that** the coating material in the region of the exterior layer contains hard abrasion-resistant particles, preferably silicon carbide.

7. Cooking device **(24)** according to one of the Claims 1 to 6, **characterised in that** antimicrobial particles **(29)** are embedded in the coating **(23)** in addition to the thermally conductive particles **(9, 25, 27)** and said particles **(29)** project out of the coating **(23)** across the layer exterior **(33)** in order to exert their anti-microbial effect in relation to the cooked item **(22)**.

8. Cooking device according to Claim 7, **characterised in that** the antimicrobial particles **(29)** are silver (Ag), gold (Au), platinum (Pt), palladium (Pd), copper (Cu), tin (Sn), antimony (Sb), bismuth (Bi) and/or zinc (Zn) in the form of pure substances, alloys or organometallic compounds.

9. Cooking device **(4, 24)** according to one of the Claims 1 to 8, **characterised in that** the coated cooking device **(4, 24)** has a two layered coating **(3, 23)** and a very thin primer **(5)** directly on the cooking device inner base **(6, 26)**, said primer having preferably a thickness in the micrometer range and containing preferably significant percentages of polytetrafluorethylene, perfluor alkyd, silicon dioxide and polyamidimide, and the primer **(5)** being covered by a further layer **(7)** containing in particular significant percentages of perfluor alkyd, wetting agents and a percentage of polytetrafluoroethylene which is 4 to 6 times higher than that of the primer **(5)**.

## Revendications

1. Appareil de cuisson **(4, 24)** destiné à chauffer des matières à cuire **(2, 22)**, avec revêtement à effet antiadhésif dans le fond de l'appareil de cuisson **(6, 26)**, le revêtement **(3, 23)** présentant des particules thermiquement conductrices **(9, 25, 27)** de conductivité thermique supérieure à 200 W/m·°K, **caractérisé en ce que**, afin de garantir une transmission de chaleur directe et parfaite du fond intérieur (6, 26) de l'appareil de cuisson à la matière à cuire **(2, 22)**, les dimensions des particules **(9, 25, 27)** sont telles que les particules **(9, 25, 27)** soient d'une épaisseur correspondant à l'épaisseur totale de la couche et, dans la mesure où il y a plusieurs couches dans le revêtement, le diamètre des particules soit de l'ordre de l'ensemble de la couche, les particules **(9, 25,27)** soient en contact direct, avec une tolérance de contact de moins de 1 $\mu$m, avec le fond intérieur non traité et nu **(6, 26)**, de préférence en contact direct, et atteignant la surface de l'ensemble du revêtement avec une tolérance de côté extérieur de couche de +/- 10%.

2. Appareil de cuisson **(4, 24)** selon revendication 1, **caractérisé en ce que** les particules sont des cristaux de diamant **(9)**, les pointes de particules des cristaux de diamant dépassent le côté extérieur du revêtement **(3, 23)** avec une tolérance de couche extérieure **(31)** jusqu'a 10% de l'épaisseur totale de le couche.

3. Appareil de cuisson **(24)** selon revendication 1 ou 2, **caractérisé en ce que** les particules sont des particules d'aluminium **(27)**, de préférence des particules d'aluminium avec additivation de nanotubes de carbone, les particules d'aluminium **(27)** présentant de préférence une forme rectangulaire, les dimensions des particules d'aluminium étant telles qu'elles se placent au dessous de l'extérieur du revêtement **(11, 33)** avec la tolérance de couche extérieure **(35)** de moins de 10% et le revêtement ayant un caractère alcalin, afin d'éviter toute oxydation des particules d'aluminium **(27)**.

4. Appareil de cuisson selon une des revendications 1 à 3, **caractérisé en ce que** les particules **(9, 25, 27)** sont faites de carbure de silicium.

5. Appareil de cuisson selon une des revendications 1 à 4, **caractérisé en ce que** les particules sont des nanotubes de carbone formant une nappe, la nappe allant jusqu'à l'extérieur du revêtement **(11, 33)** avec une tolérance de moins de 10%, la nappe étant imprégnée du matériau du revêtement et légèrement recouverte.

6. Appareil de cuisson selon une des revendications 1 à 5, **caractérisé en ce que le** matériau de revêtement contient à l'extérieur du revêtement des particules dures résistantes à l'abrasion, de préférence en carbure de silicium.

7. Appareil de cuisson **(24)** selon une des revendications 1 à 6, **caractérisé en ce que**, outre les particules thermiquement conductrices **(9, 25, 27)** des particules à effet antimicrobien **(29)** sont intégrées au revêtement **(23)** et les particules **(29)** dépassant du revêtement **(23)** au-delà du bord extérieur du revêtement **(33)** afin de déployer leur effet antimicrobien vis-à-vis de la matière à cuire **(22)**.

8. Appareil de cuisson selon revendication 7, **caractérisé en ce que** des particules à effet antimicrobien **(29)** sont en argent (Ag), or (Au), platine (Pt), palladium (Pd), cuivre (Cu), étain (Sn), antimoine (Sb), bismuth (Bi) et/ou zinc (Zn) sous forme pure, d'alliages ou de composés organométalliques.

9. Appareil de cuisson **(4, 24)** selon une des revendications 1 à 8, **caractérisé en ce que** l'appareil de cuisson **(4, 24)** a un revêtement à deux couches **(3, 23)** et qu'un primer très mince **(5)**, de préférence d'une épaisseur de l'ordre du micromètre, est posé directement sur le fond intérieur de l'appareil de cuisson **(6, 26)** et comprenant de préférence des parts importantes de polytétrafluoroéthylène, perfluoroalkyde, dioxyde de silicium et polyamidimide, le primer **(5)** étant recouvert d'une couche supplémentaire **(7)** contenant en particulier des parts importantes de perfluoroalkyde et d'agents tensioactifs ainsi qu'une part de polytétrafluoroéthylène 4 à 6 fois plus élevée que le primer **(5)**.

Fig.1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 08173321 B
- JP 7067784 B
- WO 2007070601 A
- EP 1048751 A